# DEMANDE DE BREVET EUROPEEN

(11) **EP 3 695 698 A1**
(43) Date de publication de la demande: **19.08.2020**
(21) Numéro de dépôt: 20155899.6
(22) Date de dépôt: 06.02.2020
(51) Int. Cl.: A01C 17/00, A01C 5/06, B60C 7/00, B60C 7/12, B60C 3/02, A01C 7/20

(54) **ROUE DE PLOMBAGE AMELIOREE ET PNEUMATIQUE POUR CETTE ROUE**

(30) Priorité: 13.02.2019 FR 1901464
(71) Demandeur: OTICO, 77650 Chalmaison (FR)
(72) Inventeur: PHELY, Olivier, 77650 Chalmaison (FR)
(74) Mandataire: Cabinet Netter

(57) **Abrégé**

Une roue de ré-appui comprend un corps rigide (3) et un pneumatique semi-creux (5). Le pneumatique (5) comprend une enveloppe souple (50) avec une portion formant semelle (51) par l'intermédiaire de laquelle le pneumatique (5) est monté sur le corps rigide (3), une portion formant bande de roulement (53) et une paire de flancs (55) reliant chacun la semelle (51) à la bande de roulement (53). Les flancs (55) s'étendent, en partie au moins, selon un profil généralement concave, vu depuis l'extérieur du pneumatique (5).

## Description

L'invention a trait à une roue de ré-appui, et plus particulièrement à une roue de ré-appui du type comprenant un corps rigide et un pneumatique semi-creux, ce pneumatique comprenant une enveloppe souple avec une portion formant semelle, par l'intermédiaire de laquelle le pneumatique est monté sur le corps rigide, une portion formant bande de roulement et une paire de flancs reliant chacun la semelle à la bande de roulement.

Pour le travail des champs, les machines agricoles sont équipées d'outils qui sont tirés, à une vitesse de l'ordre de 15 à 20 kilomètres par heure, le long du champ. En particulier, les semoirs comprennent plusieurs outils différents les uns des autres et travaillant les uns à la suite des autres. Généralement, il s'agit d'abord d'un ou plusieurs outils de tête, typiquement des socs, des disques ou des dents, agencés pour ouvrir un ou plusieurs sillons dans le sol. Viennent ensuite un ou plusieurs outils intermédiaires, pour le dépôt de la semence, en particulier de graines, au fond des sillons. Enfin, en queue de machine, une ou plusieurs roues sont utilisées pour refermer les sillons ou tasser la terre.

Certains semoirs comprennent au moins un outil supplémentaire, appelé roue de plombage ou plombeuse dans la technique ("firming wheel" ou encore "press wheel" en anglais), qui travaille au fond d'un sillon pour y appuyer ou enfouir les graines. Une roue de plombage opère ainsi entre l'outil de tête qui sert au dépôt des graines et les roues de queue qui referment le sillon. Une roue de plombage, et plus généralement une roue de ré-appui, présente un pneumatique avec un profil d'allure particulière, caractérisée par un rapport hauteur sur largeur élevé, de l'ordre de 2 à 3 pour 1. Cette allure permet en particulier à la roue de plombage de rouler au fond d'un sillon sans en détériorer les flancs.

Afin de lui conférer des propriétés d'auto-nettoyage, le pneumatique d'une roue de plombage est généralement de type semi-creux. On trouve aussi les qualificatifs "semi-rigide" et "non gonflable" dans la technique. Dans ce type de pneumatique, l'enveloppe souple entoure une chambre qui se trouve en communication fluidique permanente avec l'extérieur, en sorte que cette enveloppe se déforme de manière importante lorsque le pneumatique travaille.

Leur construction semi-creuse et leur rapport hauteur sur largeur élevé rend les pneumatiques des roues de plombage particulièrement sujets au flambement (flambage), en réaction à l'effort que ces roues appliquent au fond des sillons. Le pneumatique se déforme alors latéralement, sur l'un des côtés de la roue, ce qui peut entraîner une dégradation du sillon.

WO 2011/119095 divulgue un pneumatique de roue plombeuse avec une enveloppe dont les flancs s'étendent généralement selon la direction radiale du pneumatique et sont bombés vers l'extérieur de celui-ci. La bande de roulement présente une épaisseur de matière très supérieure à celle des flancs, de l'ordre de 20 à 50 pour cent.

US 3,181,622 divulgue également un pneumatique de roue plombeuse, de type semi-creux, dont l'enveloppe annulaire présente une bande de roulement concave, pour compacter le fond du sillon, et des flancs qui s'étendent chacun généralement de manière rectiligne et inclinée par rapport à la direction radiale du pneumatique, en s'approchant l'un de l'autre radialement vers l'extérieur. Ces flancs présentent une surface extérieure concave, qui sert à compacter les flancs du sillon. Ces flancs présentent une épaisseur de matière bien supérieure à celle de la bande de roulement afin de limiter une déformation du pneumatique et conserver la faculté de compacter les parois latérales du sillon.

EP 3 207 784 A1 divulgue une roue plombeuse dépourvue de pneumatique. Ce dernier s'y trouve remplacé par une paire de flasques rigides, montés chacun sur un corps de roue et reliés entre eux, en leur bord radialement opposé au corps, par un anneau, rigide également.

EP 1 461 988 A1 divulgue une roue plombeuse dont le pneumatique semi-creux est conformé de manière que ses flancs se bombent vers l'extérieur lorsqu'un effort est appliqué radialement vers l'intérieur. L'enveloppe du pneumatique peut être dotée d'une portion formant semelle, ou fourreau, qui relie les flancs entre eux à leur extrémité radialement opposée à la bande de roulement, ou à profil ouvert, c'est-à-dire que l'enveloppe est dépourvue de semelle. Au repos, les flancs du pneumatique sont bombés vers l'extérieur ou s'étendent parallèlement l'un à l'autre, selon un profil généralement rectiligne.

Les roues de ré-appui connues n'ayant que très partiellement donné satisfaction, la Demanderesse a cherché à améliorer cette situation.

On propose une roue de ré-appui du type comprenant un corps rigide et un pneumatique semi-creux. Le pneumatique comprend une enveloppe souple avec une portion formant semelle par l'intermédiaire de laquelle le pneumatique est monté sur le corps rigide, une portion formant bande de roulement et une paire de flancs reliant chacun la semelle à la bande de roulement. Les flancs s'étendent, en partie au moins, selon un profil généralement concave, vu depuis l'extérieur du pneumatique.

La roue proposée conserve la faculté des roues classiques de pouvoir travailler en fond de sillon et celle de leurs pneumatiques de se déformer afin d'auto-nettoyage. Contrairement aux roues classiques, la déformation du pneumatique est contrôlée et dirigée de manière telle qu'on évite d'abîmer le sillon, en particulier les parois latérales de celui-ci. Les flancs se déforment vers l'intérieur du pneumatique.

On propose également un kit pour former une roue de ré-appui comprenant un corps rigide et un pneumatique semi-creux. Le pneumatique comprend une enveloppe souple avec une portion formant semelle par l'intermédiaire de laquelle le pneumatique se monte sur le corps rigide, une portion formant bande de roulement et une paire de flancs reliant chacun la semelle à la bande de roulement. Les flancs s'étendent, en partie au moins, selon un profil généralement concave, vu depuis l'extérieur du pneumatique.

On propose encore un pneumatique semi-creux de roue de ré-appui comprenant une enveloppe souple avec une portion formant semelle par l'intermédiaire de laquelle le pneumatique est destiné à se monter sur un corps rigide, une portion formant bande de roulement et une paire de flancs reliant chacun la semelle à la bande de roulement. Les flancs s'étendent, en partie au moins, selon un profil généralement concave, vu depuis l'extérieur du pneumatique.

Des caractéristiques optionnelles de l'invention, complémentaires ou de substitution, sont énoncées ci-après.

Les flancs s'étendent généralement selon une direction radiale du pneumatique ou selon une direction inclinée de moins de 7 degrés par rapport à cette direction radiale.

Les flancs présentent un profil continûment courbé, de la semelle à la bande de roulement.

Les flancs présentent une épaisseur généralement constante de la semelle à la bande de roulement.

L'épaisseur des flancs est inférieure à l'épaisseur de la bande de roulement.

L'épaisseur des flancs est inférieure à l'épaisseur de la semelle.

Le pneumatique présente un encombrement selon une direction axiale qui correspond à la largeur de la bande de roulement.

Le pneumatique présente un encombrement selon une direction axiale qui correspond à la largeur de la semelle.

Le pneumatique présente un encombrement selon une direction axiale qui correspond à la plus petite largeur parmi la largeur de la bande de roulement et la largeur de la semelle.

Les flancs, ou une portion concave de ceux-ci, se raccordent à l'une au moins de la bande de roulement et de la semelle en un arête vive.

L'invention sera mieux comprise à la lecture de la description détaillée ci-après, faite en relation avec les dessins, sur lesquels :
- [Fig.1] représente une roue de plombage selon l'invention, en perspective isométrique ;
- [Fig.2] représente la roue de la figure 1 vue de face ;
- [Fig.3] représente la roue de la figure 2 en coupe selon une ligne II-II ;
- [Fig.4] représente un pneumatique pour la roue de la figure 1, vu selon une coupe radiale ;
- [Fig.5] représente schématiquement un semoir.

Les dessins contiennent des éléments de caractère certain. Ils pourront donc non seulement servir à décrire l'invention mais aussi contribuer à sa définition, le cas échéant.

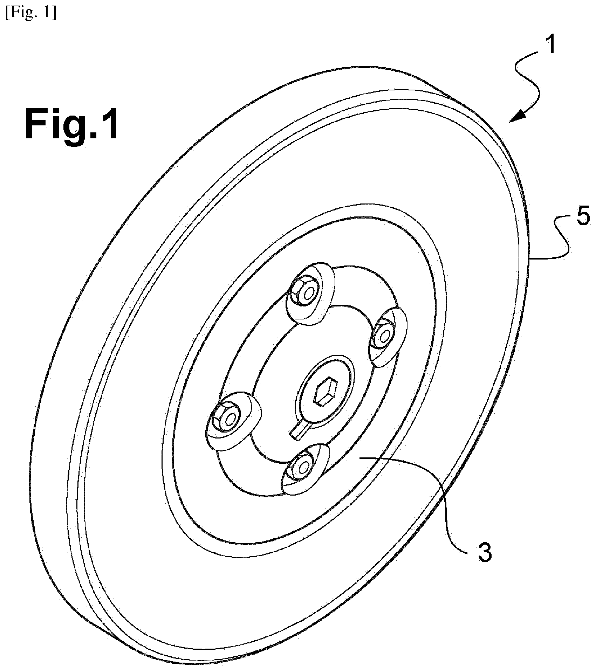

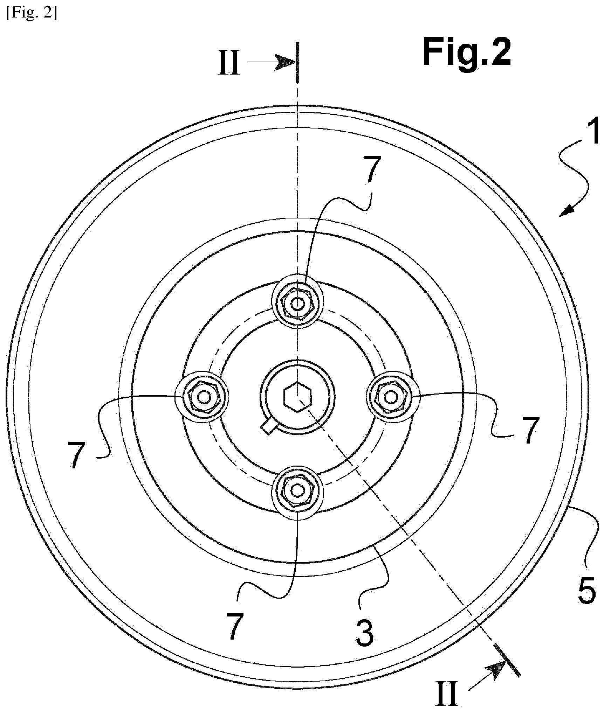

On fait référence aux figures 1 à 4.

Elles montrent un outil agricole, apte au travail des champs, sous la forme d'une roue plombeuse 1. Cette roue 1 comprend un pneumatique 5 et un corps de roue 3, lequel forme un support autour duquel est monté le périphérique 5. La roue 1 présente une allure générale de révolution autour d'un axe 4. Pour travailler, la roue 1 est montée à rotation autour de cet axe 4, ici sur une portion d'arbre 6.

Ici, le corps 3 comprend un premier flasque 31 et un second flasque 32, chacun en forme générale de disque. Chacun du premier flasque 31 et du second flasque 32 présente une première grande face et une seconde grande face, non référencées, qui s'étendent à chaque fois d'une manière généralement parallèle l'une à l'autre. Le premier flasque 31 et le second flasque 32 sont montés l'un sur l'autre en appui mutuel par l'une de leurs grandes faces respectives, et maintenus ainsi fixement, ici grâce à un jeu de boulons 7.

À l'état assemblé de la roue 1, le premier flasque 31 et le second flasque 32 logent chacun une portion longitudinale respective d'un palier cylindrique 33, ici sous la forme d'un bloc à roulements. Chacun du premier flasque 31 et du second flasque 32 présente pour ce faire un alésage respectif, sensiblement cylindrique, ouvert sur sa grande face en regard de l'autre du premier flasque 31 et du second flasque 32. Le palier cylindrique 33 reçoit intérieurement l'arbre 6.

Le corps 3 présente un encombrement en largeur, ou largeur WBW 10, qui correspond ici à l'encombrement en largeur de la roue 1, ou largeur WW. La portion centrale du corps 3 loge le palier 33. Cette portion centrale correspond à la partie la plus large du corps 3.

En périphérie du corps de roue 3 se trouve une jante, laquelle est en partie formée par le bord périphérique de chacun du premier flasque 31 et du second flasque 32. La jante présente une gorge périphérique 35, délimitée ici par des portions du premier flasque 31 et du second flasque 32 proches de leur bord extérieur respectif. La gorge 35 s'étend sensiblement sur la circonférence du corps 3 avec un profil identique. La gorge 35 est conformée de manière à recevoir une portion du pneumatique 5 en forme de talon 61.

Au voisinage de leur bord radialement extrême, le premier flasque 31 et de second flasque 32 s'étendent l'un vers l'autre de manière à former chacun un profil en forme de crochet. Les crochets formés par le premier flasque 31 et le second flasque 32 coopèrent chacun avec une rainure respective du talon 61 afin de retenir le pneumatique 5 sur le corps 3. On empêche le pneumatique 5 de déjanter inintentionnellement, c'est-à-dire de se séparer du corps 3 lorsque la roue 1 travaille. Le pneumatique 5 peut être démonté du corps 3 en désolidarisant le premier flasque 31 du second flasque 32.

En variante, le pneumatique 5 peut être solidarisé au corps 3 de manière différente. Par exemple, le corps 3 peut présenter une surface périphérique généralement cylindrique et le pneumatique 5 être enfilé à force sur cette surface. Le corps 3 peut également être réalisé d'un seul tenant ou en assemblant plus de deux pièces entre elles.

Le corps 3 constitue une partie rigide de la roue 1, en comparaison d'une partie déformable de celle-ci, constituée, pour l'essentiel, du pneumatique 5. Le premier flasque 31 et le second flasque 32 sont rigides, par exemple, réalisés en un matériau métallique ou plastique. Le pneumatique 5, ou du moins son enveloppe 50, est réalisé en un matériau souple de type caoutchouc ou élastomère. Par exemple, l'enveloppe 50 est réalisée à base d'un caoutchouc de dureté Shore A comprise entre 35 et 70, par exemple environ 43 Shore. En outre, d'autres élastomères peuvent être utilisés, par exemple des polyuréthanes.

Le pneumatique 5 comprend une enveloppe 50 délimitant intérieurement une chambre 65. L'enveloppe 50 est généralement annulaire, avec une portion radialement interne, généralement annulaire, formant une semelle 51 (aussi appelé fourreau) et une portion radialement externe, généralement annulaire, formant une bande de roulement 53. La bande 53 est radialement éloignée de la semelle 51. L'enveloppe 50 comprend en outre une paire de flancs 55 reliant chacun une extrémité respective de la semelle 51 à une extrémité respective de la bande 53. Les flancs 55 présentent chacun une allure générale de couronne. Le talon 61 fait saillie de la semelle 51, radialement vers le centre du pneumatique 5. Ici, le pneumatique 5 présente un profil sensiblement identique sur sa circonférence. Lorsque le pneumatique 5 ne travaille pas, i.e. au repos ou en l'absence de sollicitation extérieure, comme c'est le cas sur les figures, la semelle 51 et la bande de roulement 53 s'étendent sensiblement de manière coaxiale l'une de l'autre, autour de l'axe 4 du pneumatique 5.

La semelle 51 présente une section radiale sensiblement identique sur la circonférence du pneumatique 5. La semelle 51 présente une surface radialement extérieure 511, ici en deux parties, de part et d'autre du talon 61, et une surface radialement intérieure 513, toutes d'allure cylindrique. La surface extérieure 511 de la semelle 51 présente un profil rectiligne, parallèle à l'axe 4 du pneumatique 5, tandis que sa surface intérieure 513 est légèrement concave (vue depuis la chambre 65). Le pneumatique 5 se monte sur le corps 3 par l'intermédiaire de la surface extérieure 511 de la semelle 51.

La surface extérieure 511 et le talon 61 sont délimités l'une de l'autre par deux rainures sensiblement circulaires 63, une sur chaque grande face du pneumatique 5.

La semelle 51 présente en outre deux surfaces qui forment ses extrémités axiales 515. Chacune de ces extrémités 515 est conformée en couronne, avec un profil rectiligne selon la direction radiale du pneumatique 5.

La semelle 51 présente une largeur SW, qui correspond à son étendue selon la direction axiale du pneumatique 5, et une épaisseur ST, qui correspond à son étendue radiale. La largeur SW correspond à l'écartement mutuel des extrémités 515 de la semelle 51 selon la direction axiale. L'épaisseur ST correspond à la distance radiale qui sépare la surface intérieure 513 et la surface extérieure 511 de la semelle 51. Ici, la semelle 51 présente une épaisseur ST pratiquement constante d'une extrémité axiale 515 à l'autre.

La bande de roulement 53 présente ici un profil, i.e. une section radiale, sensiblement identique sur la circonférence du pneumatique 5. La bande de roulement 53 forme la partie radialement extérieure de ce pneumatique 5, ou la partie du pneumatique 5 la plus éloignée de l'axe 4 de ce pneumatique 5.

La bande 53 présente une forme généralement annulaire, avec une surface extérieure 531 et une surface intérieure 533 mutuellement opposées selon la direction radiale du pneumatique 5. La surface extérieure 531 et la surface intérieure 533 de la bande 53 présentent une allure générale cylindrique. La surface extérieure 531 présente un profil convexe (vu de l'extérieur du pneumatique 5). La surface extérieure 531 de la bande 53 est légèrement bombée/arquée, radialement vers l'extérieur, d'une extrémité axiale de la bande 53 à l'autre. Le rayon de courbure de la bande 53 est noté rayon TC. La surface extérieure 531 présente un sommet (non référencé) qui se trouve dans le plan médian du pneumatique 5. La bande 53 présente en outre deux surfaces qui forment ses extrémités axiales 535. Chacune de ces extrémités 515 est conformée en couronne, avec un profil rectiligne selon la direction radiale. La surface intérieure 533 de la bande 53 s'étend ici sensiblement de manière parallèle à la surface extérieure 531 de cette bande 53. Ici, cette surface intérieur 533 présente un profil très légèrement concave (vu de la chambre 65), pratiquement rectiligne et parallèle à la direction axiale du pneumatique 5.

La bande 53 présente une largeur TW, qui correspond à son étendue selon la direction axiale du pneumatique 5. La largeur TW correspond à l'écartement entre les extrémités axiales 535 de la bande 53, selon la direction axiale du pneumatique 5. La bande 53 présente une épaisseur TT, qui correspond à son étendue depuis sa surface extérieure 531 selon une direction normale à cette surface. L'épaisseur TT correspond à l'écartement entre la surface intérieure 533 de la bande 53 et la surface extérieure 531 de cette bande 53. La bande 53 présente ici une épaisseur TT pratiquement constante de l'une de ses extrémités axiales 535 à l'autre. Du fait de la convexité assez faible de la surface extérieure 531 de la bande 53, l'épaisseur TT correspond à peu près à l'étendue de la bande 53 selon la direction radiale du pneumatique 5.

Les flancs 55 sont agencés en symétrie miroir l'un de l'autre selon un plan médian 56 du pneumatique 5 perpendiculaire à l'axe 4 de ce pneumatique 5. En profil, les flancs 55 s'étendent généralement selon une direction radiale. Chacun des flancs 55 présente un profil concave vu de l'extérieur du pneumatique 5 et convexe vu de la chambre 65. Les flancs 55 sont courbés vers l'intérieur du pneumatique 5, en partie au moins. Ici, les flancs 55 sont continûment courbés vers l'intérieur, de la bande 53 à la semelle 51. Ici, les flancs 55 présentent une courbure SWC, ou concavité, sensiblement constante de la semelle 51 à la bande 53. Chaque flanc 55 présente une surface extérieure 551, qui relie une extrémité 515 de la semelle 51 à une extrémité 535 de la bande 53, et une surface intérieure 553, qui relie la surface intérieure 513 de la semelle 51 à la surface intérieure 533 de la bande 53. La surface extérieure 551 et la surface intérieure 553 s'étendent parallèlement l'une à l'autre. Les flancs 55 présentent une épaisseur SWT, correspondant à l'écartement entre la surface extérieure 551 et la surface intérieure 553. L'épaisseur SWT est sensiblement constante, de la semelle 51 à la bande 53. Le fond de chacun des flancs 55 se situe radialement à peu près à équidistance de la surface extérieure 511 de la semelle 51 et de la surface extérieure 531 de la bande 53.

Le pneumatique 5 présente une hauteur TYH, qui correspond à la distance qui sépare radialement la surface extérieure 531 de la bande 53, ou le sommet de celle-ci, le cas échéant, de la surface extérieure 511 de la semelle 51. Le pneumatique 5 présente également un diamètre extérieur TYOD, mesuré en la surface extérieure 531 de la bande 53, le cas échéant en son sommet, et un diamètre intérieur TYID, mesuré en la surface intérieure 511 de la semelle 51. Autrement dit, la hauteur TYH correspond à la moitié de la différence du diamètre TYOD et du diamètre TYID.

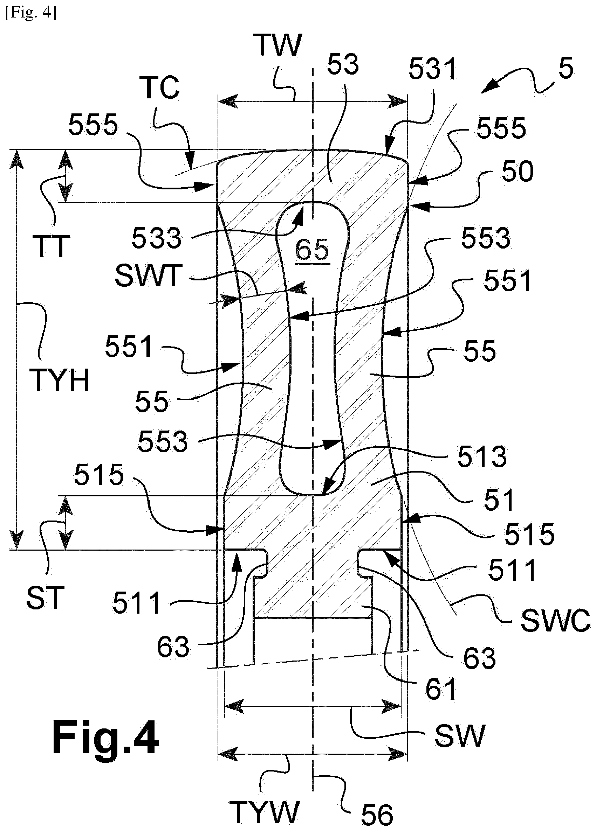

L'encombrement du pneumatique 5 en largeur, ou largeur TYW, correspond ici à la plus grande largeur parmi la largeur SW de la semelle 51 et la largeur TW de la bande 53. Dans le mode de réalisation montré ici, la largeur TW de la bande 53 est voisine de la largeur SW de la semelle 51. Sur la figure 4, la largeur SW de la semelle 61 est légèrement inférieure à celle TW de la bande 53, ceci uniquement afin de pouvoir distinguer ces largeurs sur cette figure.

Les surfaces intérieures 533 de la bande 53, 513 de la semelle 51 et 553 des flancs 55 se raccordent les unes aux autres par l'intermédiaire de congés. La surface extérieure 531 de la bande 53 se raccorde aux surfaces d'extrémité 555 de celle-ci en un arrondi. La surface extérieure 551 de chacun des flancs 55 se raccorde respectivement à une surface d'extrémité 555 de la bande 53 et une surface d'extrémité 515 de la semelle 51 en des arêtes vives. Ceci permet d'accentuer le caractère déformable de l'enveloppe. Surtout, cela favorise le flambement de chacun des flancs 55, de manière contrôlée, en conservant la bande 53 et la semelle 51 pratiquement indéformées.

Le tableau ci-dessous rassemble un jeu de valeurs dimensionnelles pour la réalisation d'un pneumatique de roue plombeuse conforme aux figures, à titre d'exemple uniquement.

**[Tableaux 1]**

| Dimension | Valeur en millimètres | Plage en millimètres |
|---|---|---|
| Largeur WBW | 35,5 | |
| Largeur WW | 35,5 | |
| Largeur SW | 25 | jusqu'à 30 environ |
| Épaisseur ST | 7 | 8 |
| Rayon TC | 60 | 50 à 70 |
| Largeur TW | 25 | jusqu'à 30 environ |
| Épaisseur TT | 7 | 8 |
| Épaisseur SWT | 6 | 5 à 7 |
| Hauteur TYH | 54 | jusqu'à 80 pour TYW de 25 |
| Largeur TYW | 25 | 30 |
| Diamètre TYID | 142 | |
| Diamètre TYOD | 250 | jusqu'à 300 |

Les figures 1 à 4 montrent la roue 1 au repos, c'est-à-dire dans un état où le pneumatique 5 n'est soumis à aucune sollicitation extérieure.

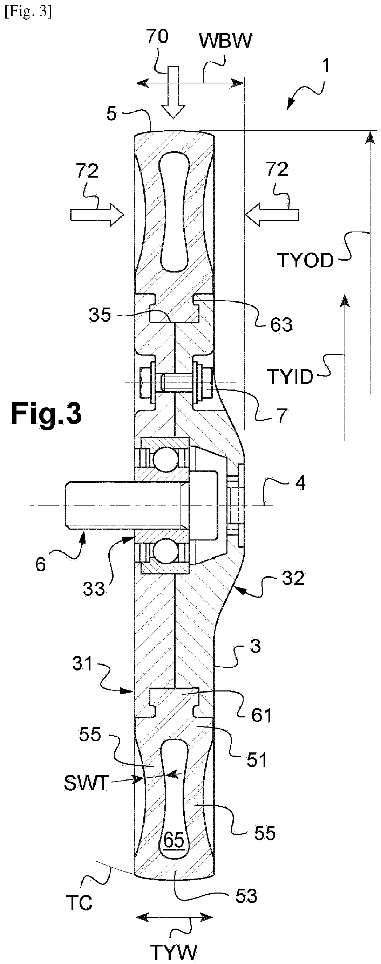

Lorsque la roue 1 travaille, la surface extérieur 531 de la bande 53 du pneumatique 5 contacte le sol, ici le fond d'un sillon afin, par exemple, d'y appuyer la semence (graines notamment). En réaction, le pneumatique 5 est sollicité radialement vers le centre de la roue 1. Cette sollicitation est représentée par la flèche 70 de la figure 3.

La chambre 65 forme un espace à l'intérieur du pneumatique 5, sensiblement annulaire et creux. La chambre 65 est non gonflée et non gonflable. La chambre 65 est en communication fluidique avec l'extérieur du pneumatique 5, ce qui permet à l'enveloppe 50 de se déformer en réaction à la sollicitation 70. Cette déformation de l'enveloppe comprend le flambement, ou fléchissement, des flancs 55 conjointement. Ces derniers conservent leur extension généralement radiale. La concavité des flancs 55 augmente. Les flancs 55 se rapprochent l'un de l'autre. Cette déformation est représentée par les flèches 72 de la figure 3. En travail, la semelle 51 reste immobile par rapport au corps 3. La semelle 51 est pratiquement indéformable en travail, du moins en comparaison du reste de l'enveloppe du pneumatique 5.

La déformation de l'enveloppe 50 contribue au nettoyage du pneumatique 5, en particulier au décollement de la terre qui peut adhérer aux surfaces extérieures de celui-ci. Malgré la déformation de cette enveloppe 50, le pneumatique 5 conserve son encombrement axial, qui correspond à la largeur de la bande 53 ou celle de la semelle 51. On évite ainsi de contacter les parois latérales du sillon et d'abîmer ce dernier. On conserve également une déformation contrôlée du pneumatique 5 dans son ensemble, du fait de la concavité des flancs 55, et ce malgré un rapport hauteur TYH sur largeur TYW important. Cette déformation est importante, en particulier en comparaison de celle d'une enveloppe aux flancs à profil rectiligne. La concavité des flancs 55 force ces dernier à ce déformer vers l'intérieur du pneumatique 5.

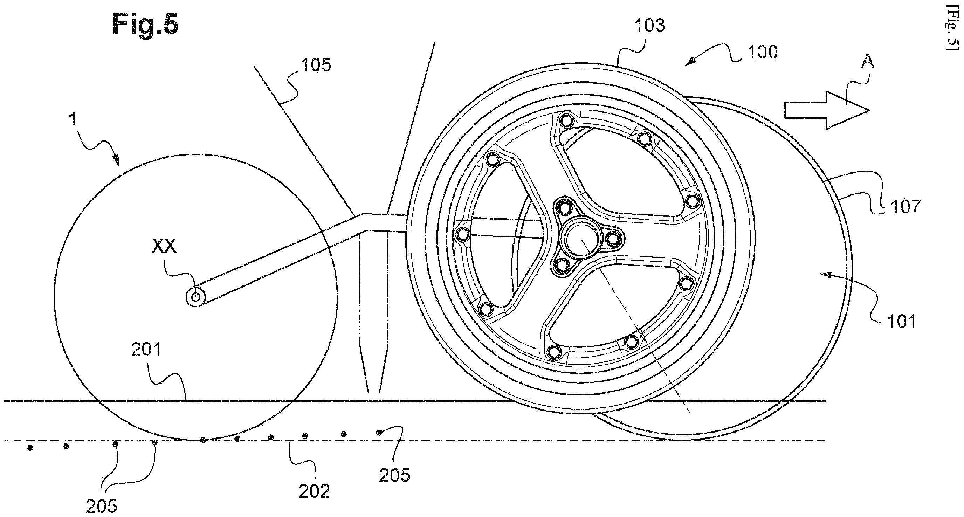

La figure 5 représente schématiquement un semoir 100 et l'organisation de certains au moins des outils qui l'équipent. La flèche A représente la direction d'avance du semoir 100 relativement à la surface 201 du sol. Le semoir 100 est équipé d'un organe de tête 101 capable d'ouvrir un sillon dans le sol, de roues porteuses 103 qui roulent sur la surface 201, d'un organe 105 capable de déposer des graines 205 de manière unitaire et d'une roue 1 selon l'invention.

Ici, l'organe de tête 101 comprend une paire de disques 107 disposés l'un par rapport à l'autre avec un profil en "V". Les disques 107 ouvrent un sillon dans le sol 201, dont le trait tireté 202 représente le fond.

Les roues porteuses 103 supportent au moins en partie le semoir 101, de part et d'autre du sillon. Les roues porteuses 103 fonctionnent comme des roues de jauge, capables de régler la profondeur du sillon. Ces roues porteuses 103 sont libres en rotation et solidaires des disques 107 selon une direction sensiblement verticale. Même en présence d'un dénivelé, les disques 107 travaillent à une profondeur sensiblement constante par rapport à la surface 201. L'organe de dépôt 105 est agencé pour amener les graines 205 au fond 202 du sillon, derrière l'organe de tête 101. La roue 1 vient enfoncer les graines 205 dans le fond 202 du sillon. Le cas échéant, une ou plusieurs roues peuvent être prévues en queue du semoir 101 afin de fermer le sillon et/ou tasser la terre derrière la roue 1 (à gauche de la figure 5).

La figure 5 montre les éléments du semoir d'une manière potentiellement plus éloignée que la réalité afin de mieux distinguer ces éléments. En pratique, l'organe de dépôt peut se trouver entre les disques 107 de sorte que ceux-ci protègent le dépôt. De manière analogue, la roue plombeuse 1 peut venir tangenter l'organe de dépôt 105 afin d'agir avant que la graine ne rebondisse.

L'invention ne se limite pas aux exemples d'outils agricoles décrits ci-avant, seulement à titre d'exemple, mais elle englobe toutes les variantes que pourra envisager l'homme de l'art dans le cadre des revendications ci-après.

Les roues de ré-appui sont équipées de pneumatiques avec un rapport hauteur sur largeur élevé, généralement compris entre 2 pour 1 et 3 pour 1, voire entre 1,5 pour 1 et 3 pour 1. On a décrit une roue plombeuse en tant qu'exemple de roue de ré-appui. Les roues plombeuses se distinguent des autres roues de ré-appui par l'étroitesse de leur pneumatique : typiquement, la largeur TYW d'un pneumatique de roue plombeuse est comprise entre 15 et 30 millimètres, et généralement supérieure à 20 millimètres. Le diamètre extérieur TYOD d'un pneumatique de ce type est typiquement compris entre 170 et 300 millimètres. D'autres exemples de roues de ré-appui comprennent les roues utilisées pour refermer les sillons, lesquelles appuient le sol à proximité du sillon. Ces roues sont généralement équipées de pneumatiques plus hauts et plus larges que ceux des roues plombeuses. Typiquement, la largeur TYW de ces pneumatiques peut atteindre 60 voire 70 millimètres, pour un diamètre extérieur TYOD de compris de 400 à 500 millimètres. Dans ce cas, l'épaisseur ST peut atteindre 12 millimètres. Ces roues peuvent être disposées droites, ou de manière à former un profil en "V".

On a décrit une roue de plombage 1 dont le pneumatique 5 présente un rapport hauteur sur largeur un peu supérieur à 2. Dans le cas où l'on réduit la ou les épaisseurs de l'enveloppe 50, par exemple à 4 ou 3 millimètres en moyenne, on peut abaisser la valeur minimale du rapport hauteur TYH sur largeur TYW, jusqu'à 1 pour 1. Ceci, en particulier pour une roue plombeuse, mais aussi, plus généralement, pour une roue de ré-appui quelconque.

On a montré une enveloppe 50 dont la bande 53 et la semelle 51 sont sensiblement plus épaisses que les flancs 55. Ceci permet d'augmenter la déformation des flancs 55 et de favoriser cette dernière, au détriment d'une déformation de la bande 53 et/ou de la semelle 51. En outre, La bande 53 est avantageusement plus épaisse que les flancs 55 pour pallier son usure. En outre, la semelle 51 est avantageuse plus épaisse que les flancs 55 pour assurer la stabilité du pneumatique 5 sur le corps 3, y compris lorsque la roue 1 travaille.

On a montré des flancs 55 qui s'étendent généralement suivant la direction radiale du pneumatique 55. Une légère inclinaison de la direction d'extension des flancs par rapport à la direction radiale peut être envisagée, par exemple de l'ordre de 5 à 7 degrés au plus. Cette inclinaison est telle que les flancs 55 se rapprochent l'un de l'autre en allant radialement vers l'extérieur du pneumatique 5.

On a décrit une situation avantageuse où la bande 53 et la semelle 51 présentent des largeurs voisines l'une de l'autre, en particulier égales. On peut envisager une légère différence entre ces largeurs.

On a décrit une bande 53 avec un profil légèrement bombé. En variante, la bande 53 peut être conformée de manière différente, en fonction par exemple du type de semence ou des caractéristiques du sol à travailler. La bande 53 peut par exemple présenter un profil rectiligne. La bande 53 peut ainsi présenter une courbure plus prononcée, par exemple avec un rayon d'environ 12 millimètre, d'un flanc 55 à l'autre, ou une courbure localisée, qui n'occupe qu'une partie de la bande 53, par exemple avec un rayon de 8 millimètres.

On a décrit des flancs 55 continûment courbés, de la semelle 51 à la bande 53. En variante, on pourrait envisager que, tout en conservant leur allure concave lorsqu'ils sont vus de l'extérieur, seule une portion de ces flancs soit courbée, le reste de ces flancs 55 s'étendant alors de manière rectiligne.

## Revendications

1. Roue de ré-appui du type comprenant :
- un corps rigide (3) ;
- un pneumatique semi-creux (5), le pneumatique (5) comprenant une enveloppe souple (50) avec une portion formant semelle (51) par l'intermédiaire de laquelle le pneumatique (5) est monté sur le corps rigide (3), une portion formant bande de roulement (53) et une paire de flancs (55) reliant chacun la semelle (51) à la bande de roulement (53), **caractérisé en ce que** :
- les flancs (55) s'étendent, en partie au moins, selon un profil généralement concave, vu depuis l'extérieur du pneumatique (5).

2. Roue selon la revendication 1, dans laquelle les flancs (55) s'étendent généralement selon une direction radiale du pneumatique (5) ou selon une direction inclinée de moins de 7 degrés par rapport à cette direction radiale.

3. Roue selon l'une des revendications 1 et 2, dans laquelle les flancs (55) présentent un profil continûment courbé, de la semelle (51) à la bande de roulement (53).

4. Roue selon l'une des revendications précédentes, dans laquelle les flancs (55) présentent une épaisseur (SWT) généralement constante de la semelle (51) à la bande de roulement (53).

5. Roue selon la revendication 4, dans laquelle l'épaisseur (SWT) des flancs (55) est inférieure à l'épaisseur (TT) de la bande de roulement (53).

6. Roue selon l'une des revendications 4 et 5, dans laquelle l'épaisseur (SWT) des flancs (55) est inférieure à l'épaisseur (ST) de la semelle (51).

7. Roue selon l'une des revendications précédentes, dans laquelle le pneumatique (5) présente un encombrement (TYW) selon une direction axiale qui correspond à la largeur (TW) de la bande de roulement (53).

8. Roue selon l'une des revendications précédentes, dans laquelle le pneumatique (5) présente un encombrement (TYW) selon une direction axiale qui correspond à la largeur (SW) de la semelle (51).

9. Roue selon l'une des revendications précédentes, dans laquelle le pneumatique (5) présente un encombrement selon une direction axiale qui correspond à la plus grande largeur parmi la largeur (TW) de la bande de roulement (53) et la largeur (SW) de la semelle (51).

10. Roue selon l'une des revendications précédentes, dans laquelle les flancs (55), ou une portion concave de ceux-ci, se raccordent à l'une au moins de la bande de roulement (53) et de la semelle (51) en une arête vive.

11. Kit pour former une roue de ré-appui comprenant un corps rigide (3) et un pneumatique semi-creux (5), le pneumatique (5) comprenant une enveloppe souple (50) avec une portion formant semelle (51) par l'intermédiaire de laquelle le pneumatique (5) se monte sur le corps rigide (3), une portion formant bande de roulement (53) et une paire de flancs (55) reliant chacun la semelle (51) à la bande de roulement (53), **caractérisé en ce que** les flancs (55) s'étendent, en partie au moins, selon un profil généralement concave, vu depuis l'extérieur du pneumatique (5).

12. Pneumatique semi-creux de roue de ré-appui comprenant une enveloppe souple (50) avec une portion formant semelle (51) par l'intermédiaire de laquelle le pneumatique (5) est destiné à se monter sur un corps rigide (3), une portion formant bande de roulement (53) et une paire de flancs (55) reliant chacun la semelle (51) à la bande de roulement (53), **caractérisé en ce que** les flancs (55) s'étendent, en partie au moins, selon un profil généralement concave, vu depuis l'extérieur du pneumatique (5).
